# EUROPEAN PATENT APPLICATION

(11) **EP 4 723 615 A1**
(43) Date of publication of application: **08.04.2026**
(21) Application number: 24814942.9
(22) Date of filing: 25.03.2024
(51) Int. Cl.: H04N 5/93, H04N 21/431, H04N 21/433, H04N 23/60, H04N 23/63

(54) **REPRODUCTION CONTROL DEVICE, CONTROL METHOD, AND PROGRAM**

(30) Priority: 26.05.2023 JP 2023086766
(71) Applicant: Canon Kabushiki Kaisha, Tokyo, 146-8501 (JP)
(72) Inventor: TSUGAWA, Hiroshige, Tokyo 146-8501 (JP); YOSHIKAWA, Akio, Tokyo 146-8501 (JP)
(74) Representative: TBK
(86) International application number: PCT/JP2024/011608
(87) International publication number: WO 2024/247455

(57) **Abstract**

A reproduction control apparatus for controlling reproduction of a clip formed by not less than one video file recorded in a recording medium, comprises a determination unit that determines whether the clip is a clip of a first type formed by a plurality of video files divided by a predetermined unit or a clip of a second type different from the clip of the first type, and a control unit that controls, for the clip determined to be the clip of the second type by the determination unit, to display information based on the not less than one video file forming the clip, and for the clip determined to be the clip of the first type by the determination unit, not to display information based on the plurality of video files forming the clip.

## Description

### TECHNICAL FIELD

The present invention relates to a reproduction control apparatus, a control method and a program.

### BACKGROUND ART

At news sites such as broadcasting stations and news agencies, recently, it is necessary to improve the efficiency of production workflows to provide correct information more quickly than SNS (Social Networking Service). To implement the high efficiency, network transfer for automatically uploading a video file from a camera to a file server in a broadcasting station has become more important. As a means for implementing the network transfer, there is a method of periodically dividing a video file, recording it in a recording medium attached to a camera, and sequentially transferring completed video files to a file server in a broadcasting station. For example, a function can be considered which generates and records video files divided by a short recording time unit designated by a user and handles the divisionally recorded video files as one content.

PTL 1 discloses a function of detecting the upper limit of the file size of the file system of a recording medium and divisionally recording a video file in accordance with the upper limit.

### CITATION LIST

### PATENT LITERATURE

PTL 1: Japanese Patent Laid-Open No. 2016-167163

### SUMMARY OF INVENTION

### TECHNICAL PROBLEM

In a device having a function of executing, in the device main body, a function of acquiring and displaying information of a recorded video file or a function of reproducing it, when executing the function, to handle divided files as one content, it is necessary to load all files and acquire information.

Like PTL 1, when divisionally recording files in a size according to the file system of a recording medium, the size is relatively large, but the number of divisions (the number of files) is relatively small. For this reason, time is not taken to acquire information, and a user can execute the function comfortably. On the other hand, however, when divisionally recording a file in a relatively short unit intended by the user, the number of divisions is large, a long time is taken to load files, and the user waits for a long time in operating the device, making it difficult to use.

The present invention has been made in consideration of the above-described problem, and realizes a technique of implementing display of an index or the like in a short time even in a case where one scene is divided into a plurality of time-series files and recorded.

### SOLUTION TO PROBLEM

In order to solve the aforementioned problem, the present invention provides a reproduction control apparatus for controlling reproduction of a clip formed by not less than one video file recorded in a recording medium, characterized by comprising:
determination means for determining whether the clip is a clip of a first type formed by a plurality of video files divided by a predetermined unit or a clip of a second type different from the clip of the first type; and
control means for controlling, for the clip determined to be the clip of the second type by the determination means, to display information based on the not less than one video file forming the clip, and for the clip determined to be the clip of the first type by the determination means, not to display information based on the plurality of video files forming the clip.

### ADVANTAGEOUS EFFECTS OF INVENTION

According to the present invention, it is possible to realize a technique of implementing display of an index or the like in a short time even in a case where one scene is divided into a plurality of time-series files and recorded.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a block diagram exemplifying the configuration of a reproduction control apparatus according to the embodiment;
Fig. 2 is a view exemplifying a reproduction index screen according to the embodiment;
Fig. 3 is a view exemplifying a reproduction index screen on which chunk clips according to the embodiment are displayed;
Fig. 4 is a flowchart exemplifying reproduction index screen display processing according to the embodiment;
Fig. 5 is a view exemplifying a reproduction instruction screen according to the embodiment;
Fig. 6 is a view exemplifying a reproduction screen according to the embodiment;
Fig. 7A is a flowchart exemplifying clip reproduction processing according to the embodiment; and
Fig. 7B is a flowchart exemplifying clip reproduction processing according to the embodiment.

### DESCRIPTION OF EMBODIMENTS

Hereinafter, embodiments will be described in detail with reference to the attached drawings. Note that the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

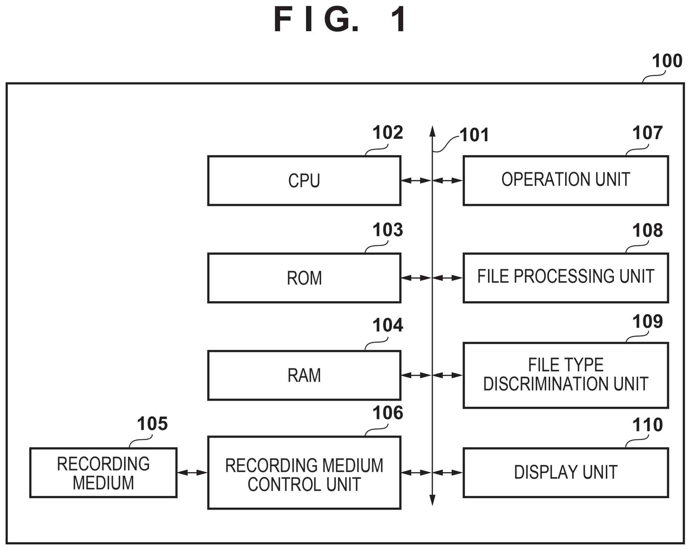

Fig. 1 is a block diagram exemplifying the internal configuration of a reproduction control apparatus 100 according to this embodiment. As shown in Fig. 1, the reproduction control apparatus 100 includes a bus 101, a CPU 102, a ROM 103, a RAM 104, a recording medium 105, a recording medium control unit 106, an operation unit 107, a file processing unit 108, a file type discrimination unit 109, and a display unit 110.

The bus 101 is formed by an address bus, a data bus, and a control bus. The bus 101 is used to communicate a command or data between the constituent units of the reproduction control apparatus 100. The CPU 102 is a processor configured to load a program stored in the ROM 103, execute the program, and thus control the constituent units of the reproduction control apparatus 100. The ROM 103 is a nonvolatile memory in which programs and various kinds of setting information are stored. The RAM 104 is a volatile memory used as a work memory.

The recording medium 105 is a recording medium for storing video data and is a medium detachably attached to the reproduction control apparatus. Note that a description will be made assuming that a video is already recorded in the recording medium by a video camera held by a user. The recording medium control unit 106 is a control unit configured to read out video data from the recording medium 105. Based on control from the CPU 102, the recording medium control unit 106 loads a video file stored in the recording medium 105 and deploy it on the RAM 104.

The operation unit 107 is an input device configured to accept a user operation and including arrow keys used to perform a selection operation such as a menu operation on a UI screen displayed on the display unit 110. The operation unit 107 may be not a physical button or switch but a touch panel superimposed on the display screen of the display unit 110, or a combination thereof.

Based on control of the CPU 102 and the discrimination result of the file type discrimination unit 109, the file processing unit 108 performs various kinds of processing using a video file or the like deployed on the RAM 104. The processing includes acquisition of information from a video file, generation of a reproduction index screen, decoding processing of video data or audio data included in a video file, enlargement/reduction processing for decoded video data, noise reduction processing, color conversion processing, and the like. Depending on the type of processing, these processes may be executed by the CPU 102 in accordance with a program.

The file type discrimination unit 109 discriminates, based on file type information (a file header, or the like) included in a video file deployed on the RAM 104, whether it is a file division clip, a chunk division clip, or another non-divided clip. Note that the file division clip here indicates one or more files time-serially divided in a predetermined size depending in the file system in one shooting recording. For example, when the file system of the recording medium is FAT32, the upper limit size of one file is 4 GB. Hence, files divided in 4 GB form a file division clip. In this embodiment, to simplify the description, assume that the recording medium 105 is an SDHC card, and the file system in use is FAT32. Since the maximum memory capacity of the SDHC card is 32 GB in standard, eight files each having the maximum size can be stored at maximum. A chunk division clip includes a plurality of time-series files each of which is recorded at time designated by the user in one shooting recording. After each file is recorded, it is automatically transferred (chunk transfer) to an external apparatus such as a file server. It is assumed that when the user selects execution of the chunk transfer function on the video camera (not shown) used by the user, there is a function capable of selecting the time length of the video of each video file at the time of chunk transfer from 30 sec, 1 min, and 2 min. For example, when the user sets the time length of the video to be stored in one file to 30 sec, and a series of videos of 6 hours are shot and recorded, 720 files are recorded in the recording medium 105. The 720 files will be generically referred to as a chunk division clip. Note that the time length of division of the chunk division clip is set by an image capturing apparatus when capturing an image by the image capturing apparatus. The time length that can be set at that time is not limited to the above-described example. However, the time length of the video divided in the chunk division clip (the time length that the user can set) is shorter than the time length of the video of each clip divided in the file division clip. In the file division clip, a video file is divided in the upper limit file size of the file system. A time length much shorter than the time length with which a video of highest quality captured by the image capturing apparatus can be recorded in the upper limit size can be set as the time length of the chunk division clip.

Thus, the file division unit in the chunk division clip is smaller than the file division unit in the file division clip. For this reason, even when the total time (shooting time) of a clip is the same, the number of files in the chunk division clip is larger than that in the file division clip. Also, the chunk division clip is a clip recorded in the recording medium when execution of the chunk transfer function is set on the image capturing apparatus. When executing the chunk transfer function, the image capturing apparatus divides a video by the time length designated by the user, and a video file is recorded in the recording medium. Then, when recording of each video file in the recording medium is completed, each video file is transferred (chunk transfer) to an external apparatus such as a file server, thereby sequentially transferring the video files before completion of clip shooting. Hence, when the time length of the chunk division clip is long, clip shooting is completed before the elapse of the time length of division, and chunk transfer cannot be started before completion of clip shooting. Hence, the time length of division of the chunk division clip settable on the image capturing apparatus is preferably shorter than the general recording time of a clip, that is, 30 sec, 1 min, or 2 min. Since division in 1 min is easy to manage, at least 1 min is settable on the image capturing apparatus.

The display unit 110 is a display device that displays a reproduction index screen (list display) generated by the file processing unit 108 or a video decoded and reproduced under the control of the CPU 102. Note that in Fig. 1, the reproduction control apparatus 100 includes the display unit 110 as a constituent element. However, the reproduction control apparatus 100 may be connected to an external independent display device and use the external independent display device as an alternative device of the display unit 110.

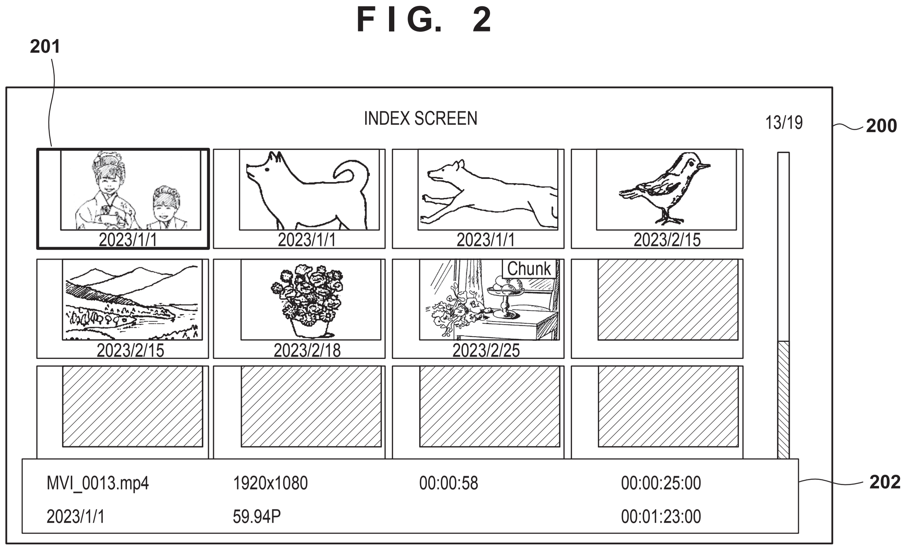

Fig. 2 exemplifies a reproduction index screen 200 that displays, on the display unit 110, a reproduction index list generated by the file processing unit 108. In the example shown in Fig. 2, thumbnail images of (first files belonging to) clips stored in the recording medium 105 are displayed. The display unit 110 according to this embodiment can display 12 clips at maximum, as shown in Fig. 2. Also, the screen 200 is provided with a region 202 in which detailed information of a clip 201 selected by the user during display is displayed. Note that each of a plurality of files forming a chunk division clip is managed with a file name constituted by "character string of common file name" + "number indicating order". The naming roots of file names are the same even for files other than the chunk division clip.

Information displayed in the region 202 indicates that the selected clip 201 is a normal clip without division and details are as follows.
File name: "MVI_0013.Mp4"
Resolution (number of pixels): 1920 × 1080 pixels
Shooting date/time: January 1, 2023, from 00:00:25 to 00:01:23
Time length: 58 sec
Frame rate: 59.94 pictures/sec

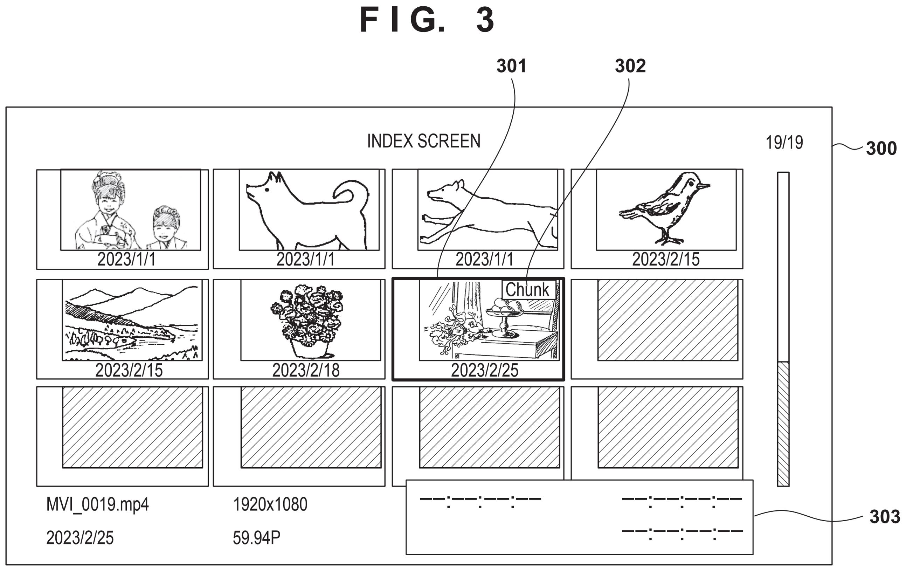

Fig. 3 exemplifies a reproduction index screen 300 different from Fig. 2. The example of Fig. 3 shows a case where the user selects a chunk division clip 301. Information "Chunk" 302 indicating that this clip is a chunk division clip is superimposed and displayed on a thumbnail image 301 of the chunk division clip 301. Note that in the example shown in Fig. 3, a character string indicating a chunk division clip is displayed. However, any form identifiable by the user can be used and, for example, an icon indicating a chunk division clip may be superimposed and displayed. Additionally, in the region for displaying details, the file name, the shooting date, the resolution, and the frame rate of the chunk division clip 301 are displayed, but pieces of information (total time length, shooting date/time (particularly shooting end time), and the like) that cannot be acquired unless all divided files are read out are not displayed, as indicated by reference numeral 303. In a case where a file division clip is selected, pieces of information that cannot be acquired unless all divided files are read out are also displayed, unlike a case where the chunk division clip shown in Fig. 3 is selected. As for the file division clip, as described above, since the number of divided video files is 8 at maximum, information is displayed by reading out all divided files.

Note that instead of identifiably displaying chunk division clips and other clips using clip selection by the user as a trigger, when displaying a clip list, individual clips may be identifiably displayed such that chunk division clips and other clips can be discriminated.

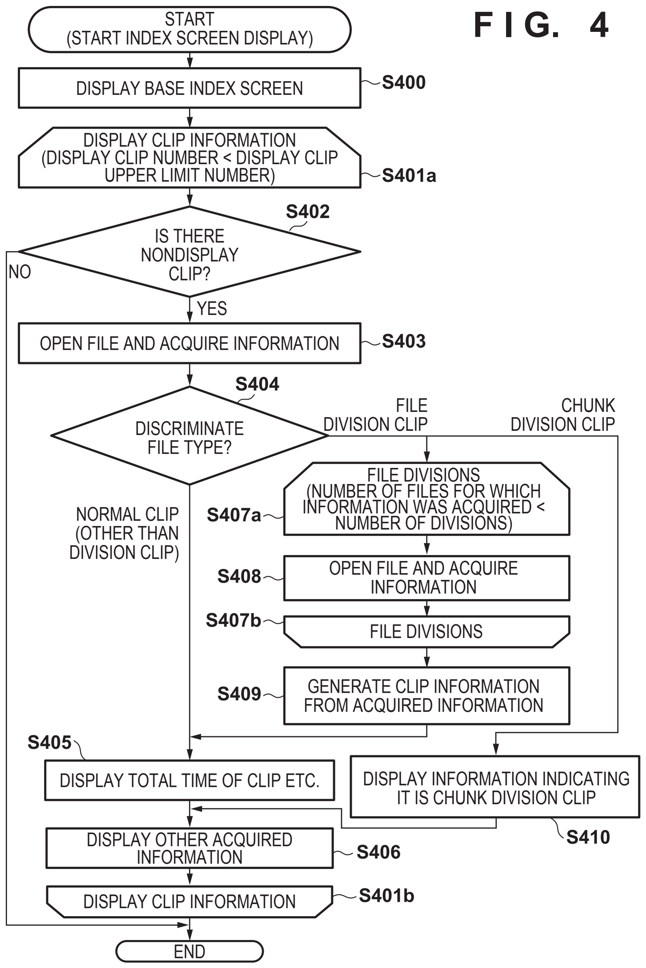

Fig. 4 is a flowchart exemplifying reproduction index screen display processing according to this embodiment. The processing shown in Fig. 4 is implemented by the CPU 102 controlling the file processing unit 108. Note that steps S401a to S401b shown in Fig. 4 indicate a loop that is repetitively processed as long as a condition shown in step S401a is satisfied. This also applies to steps S407a to S407b.

When the user inputs an instruction from the operation unit 107 or the like to start index screen display processing, in step S400, the file processing unit 108 generates a reproduction index screen in which the region for displaying the information of a clip is blank, displays the reproduction index screen on the display unit 110, and advances the process to step S401.

In step S401a, the file processing unit 108 starts clip information display processing indicated by the processes of steps S402 to S406 to be described below. Note that, as described above, the upper limit number of clips to be displayed is 12 in this embodiment, but the upper limit number is not particularly limited.

In step S402, the file processing unit 108 determines whether a non-display clip exists among clips stored in the recording medium 105. Upon determining that there is not a non-display clip, that is, upon determining that all clips are displayed, the file processing unit 108 ends the processing. Upon determining that there is a non-display clip, the file processing unit 108 advances the process to step S403.

In step S403, the file processing unit 108 opens the file of the first non-display clip. Also, the file processing unit 108 acquires various kinds of information added to the file and stores these in the RAM 104. Then, the file processing unit 108 advances the process to step S404.

In step S404, the file processing unit 108 discriminates the type of the clip from a file type included in the information acquired in step S403. Upon determining that the clip of interest is a normal clip (undivided clip), the file processing unit 108 advances the process to step S405. On the other hand, upon determining that the clip of interest is a file division clip, the file processing unit 108 advances the process to step S407a to acquire information added to the file. Upon determining that the clip of interest is a chunk division clip, the file processing unit 108 advances the process to step S410 without performing processing of acquiring information added to all divided files.

In step S405, the file processing unit 108 displays, of the acquired information, clip information that cannot be generated unless the pieces information of all files are acquired in a case of a file-divided clip, and advances the process to step S406. The information is, for example, the total time length of the clip.

In step S407a, the file processing unit 108 repeats the process of step S408 as many times as the number of divisions using the information of the number of file divisions added to the first file of the file-divided clip acquired in step S403. When the process is performed as many times as the number of divisions in step S408, the file processing unit 108 advances the process to step S409.

In step S408, the file processing unit 108 opens the divided file of interest included in the clip of interest, acquires information added to the file, like step S403, and stores the information in the RAM 104. As a result, pieces of information as many as the number of files of the file division clip are stored in the RAM 104.

In step S409, the file processing unit 108 generates clip information from the information of all divided files acquired in the loop processing of step S407a to S407b. The file processing unit 108 advances the process to step S405.

In step S410, the file processing unit 108 displays information (in the embodiment, the character string "Chunk") indicating a chunk division clip. The file processing unit 108 then advances the process to step S406.

In step S406, the file processing unit 108 displays other pieces of acquired information (a thumbnail and the like).

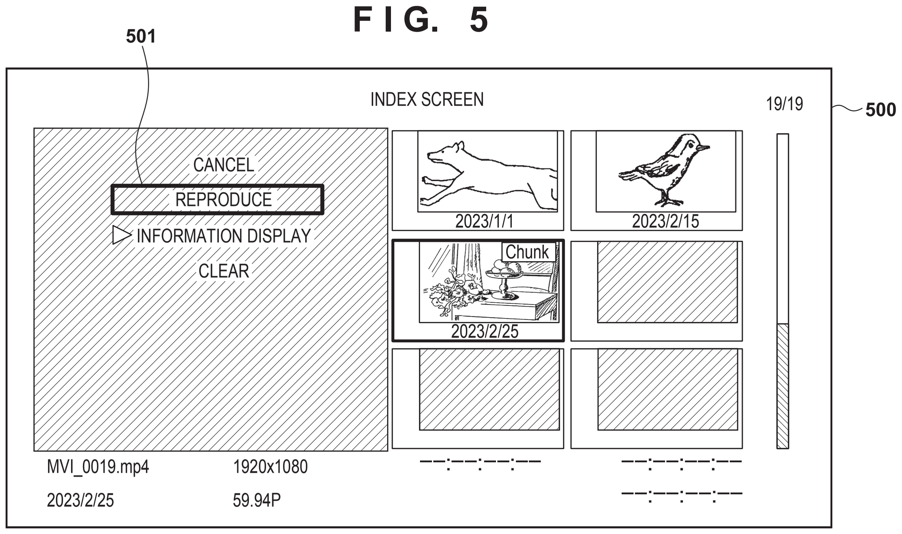

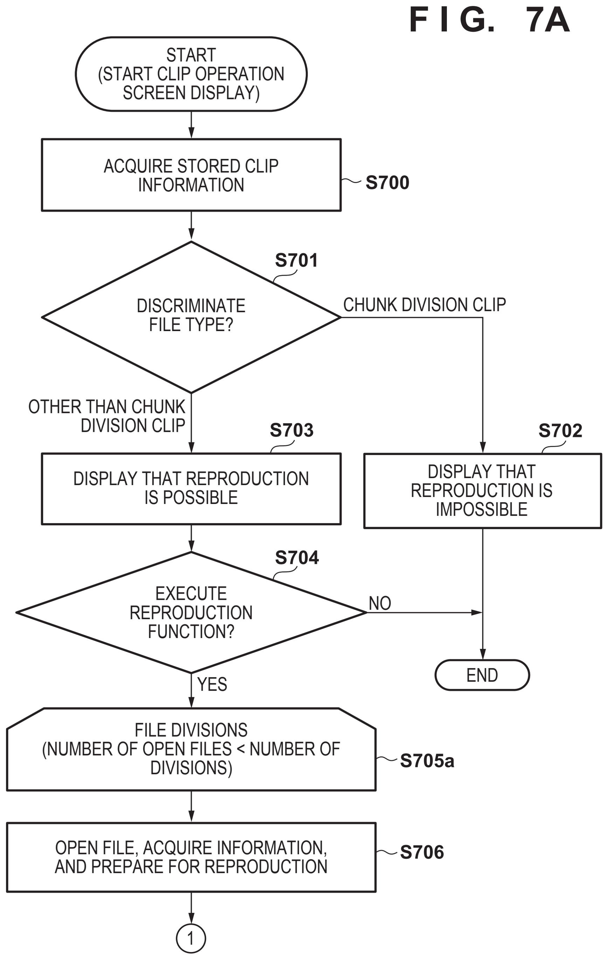

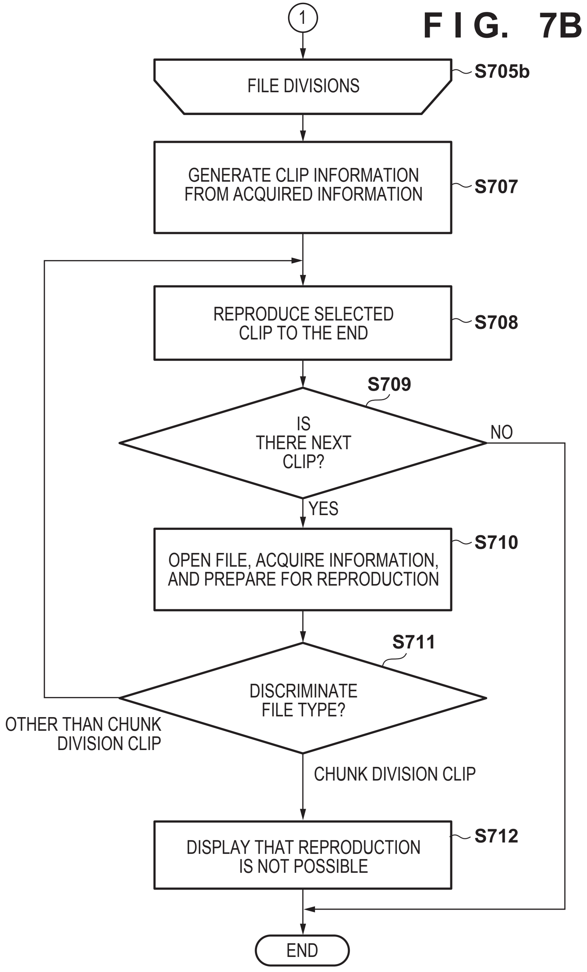

Fig. 5 exemplifies a menu screen that is generated by the file processing unit 108 and displayed on the display unit 110 when a clip operation screen for a chunk division clip is opened based on processing shown in Figs. 7A and 7B to be described later. That is, the file processing unit 108 also functions as a menu display unit.

In a screen 500, a menu including selectable items are superimposed and displayed to operate a selected chunk division clip, in addition to the reproduction index screen. As one of the items of the menu, a button 501 used to execute a reproduction function is included. When the selected clip is a chunk division clip, the item is displayed in gray to indicate that the reproduction function cannot be selected. Note that another display form may be used as long as reproduction enable and disable states can be identified.

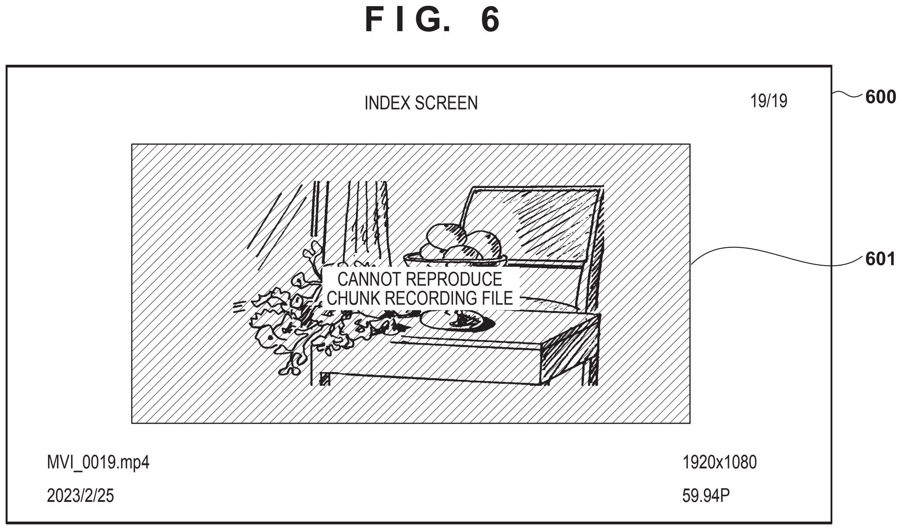

Fig. 6 exemplifies a screen 600 that is displayed on the display unit 110 when a reproduction target clip is a chunk division clip in a case of continuous reproduction of clips based on processing shown in Figs. 7A and 7B to be described later. The screen 600 shows an example in which a region 601 indicating that the reproduction target clip cannot be reproduced because it is a chunk division clip is superimposed and displayed on the screen during clip reproduction.

Figs. 7A and 7B are flowcharts exemplifying clip reproduction processing according to this embodiment. The CPU 102 controls the file processing unit 108 and implements clip operation screen display processing and target clip reproduction processing in accordance with a selection operation by the user for a clip displayed on the reproduction index screen. Note that steps S705a to S705b indicate loop processing for repetitively executing processing (step S706 in Fig. 7A) sandwiched therebetween as long as a condition shown in step S705a is satisfied.

When the user selects a specific clip on the reproduction index screen and starts displaying the operation screen, first, in step S700, the file processing unit 108 acquires clip information of the clip and advances the process to step S701. As the clip information, the information stored in the RAM 104 in step S403 or S409 of Fig. 4 may be acquired, or the clip information may be acquired by opening the file of the clip.

In step S701, the file processing unit 108 discriminates the type of the clip of interest from a file type included in the information acquired in step S700. Upon determining that the type of the clip of interest is a chunk division clip, the file processing unit 108 advances the process to step S702. Upon determining that the clip of interest is not a chunk division clip, the file processing unit 108 advances the process to step S703.

In step S702, the file processing unit 108 displays a menu in which reproduction is disabled, like the example shown in Fig. 5, and ends the processing. Note that when the user selects an item "information display" of this menu, the file processing unit 108 performs processing of acquiring information of a file before the chunk division clip, although it takes time. When the acquisition processing is ended, all the pieces of information (total time length and the like) necessary for reproduction are obtained and, therefore, the reproduction button 501 is displayed such that it functions.

In step S703, the file processing unit 108 displays a menu in which the reproduction button 501 is enabled, contrary to the example shown in Fig. 5, displays a clip operation screen, and advances the process to step S704.

In step S704, the file processing unit 108 determines whether a reproduction instruction (an operation of selecting the reproduction button 501) by the user exists. Upon determining that a reproduction instruction by a user operation exists, the file processing unit 108 advances the process to step S705a. Upon determining that a reproduction instruction does not exist, the file processing unit 108 ends the processing.

In steps S705a to S705b, the file processing unit 108 repeats the process of step S706 as many times as the number of file divisions of the clip, and advances the process to step S707 when the process is performed as many times as the number of file divisions of the clip.

In step S706, the file processing unit 108 opens the file of the clip to prepare for reproduction and acquires information added to the file.

In step S707, the file processing unit 108 generates clip information from the information acquired in step S706 and advances the process to step S708.

In step S708, the file processing unit 108 performs various kinds of processing such as decoding for the clip and executes reproduction processing. When the reproduction is completed up to the end of the clip, the file processing unit 108 advances the process to step S709.

In step S709, the file processing unit 108 determines, based on the clip information acquired in step S700, whether the next clip is stored in the recording medium 105. This determination may be done by confirming the state of the recording medium 105 via the recording medium control unit 106 based on the control of the CPU 102 again. Here, upon determining that the next clip exists, the file processing unit 108 advances the process to step S710 to executes continuous reproduction. Upon determining that the next clip does not exist, the file processing unit 108 ends the processing.

In step S710, the file processing unit 108 opens the file of the clip to be reproduced next to prepare for reproduction and acquires information added to the file, like step S706, and advances the process to step S711.

In step S711, the file processing unit 108 determines, based on the information of the clip, whether the clip is a chunk division clip, like step S701. Upon determining that the clip is a chunk division clip, the file processing unit 108 advances the process to step S712. Upon determining that the clip is not a chunk division clip, the file processing unit 108 returns the process to step S708 and executes the processes of steps S708 to S711 again.

In step S712, the file processing unit displays that reproduction is impossible, as shown in the example of Fig. 6, because the clip is a chunk division clip, and ends the processing.

More specifically, according to this embodiment, in a case of a chunk division clip, time-consuming processing of opening all divided files can be omitted. This allows the user to avoid waiting for a long time when displaying the reproduction index screen using the recording medium in which the video file including the clip is recorded or when reproducing the clip.

In this embodiment, processing branches based on whether a clip is a chunk division clip or not. Instead, a threshold may be provided for the number of divisions, and processing may branches based on whether the number of divisions is less than the threshold. For example, in this embodiment, in a case of a chunk division clip divided into 720 files corresponding to the assumed maximum number of divisions, a time of 10 to 30 sec is needed for the processing of opening all the files, and the time is linear with respect to the number of divisions. For this reason, it can be considered that the processing branches by setting the threshold to the number of divisions, that is, 10 files for which the processing can be ended within the time that makes the user feel inconvenient in the operation, for example, 3 sec.

Note that in the above-described embodiment, the processes shown in Figs. 4, 7A, and 7B are performed by the file processing unit 108. However, these may be performed by the CPU 102 executing programs.

### [Other embodiments]

The present invention can be implemented by processing of supplying a program for implementing one or more functions of the above-described embodiment to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-086766 filed May 26, 2023, which is hereby incorporated by reference herein.

### REFERENCE SIGNS LIST

100...Reproduction control apparatus, 101...Bus, 102...CPU, 103...ROM, 104...RAM, 105...Recording medium, 106...Recording medium control unit, 107...Operation unit, 108...File processing unit, 109...File type discrimination unit, 110...Display unit

## Claims

1. A reproduction control apparatus for controlling reproduction of a clip formed by not less than one video file recorded in a recording medium, **characterized by** comprising:
determination means for determining whether the clip is a clip of a first type formed by a plurality of video files divided by a predetermined unit or a clip of a second type different from the clip of the first type; and
control means for controlling, for the clip determined to be the clip of the second type by the determination means, to display information based on the not less than one video file forming the clip, and for the clip determined to be the clip of the first type by the determination means, not to display information based on the plurality of video files forming the clip.

2. The reproduction control apparatus according to claim 1, **characterized in that**
the clip of the second type is a clip formed by a plurality of video files divided by a unit larger than the predetermined unit.

3. The reproduction control apparatus according to claim 1, **characterized in that**
the clip of the first type is a clip formed by a plurality of video files divided by a time length set by a user.

4. The reproduction control apparatus according to claim 3, **characterized in that**
the clip of the second type is a clip formed by a plurality of video files divided based on a file size recordable in the recording medium.

5. The reproduction control apparatus according to claim 1, **characterized in that**
the clip of the second type is a clip formed by one video file.

6. The reproduction control apparatus according to any one of claims 1 to 5, **characterized in that**
the control means controls,
for the clip determined to be the clip of the second type, to display information about a total time length of a video of the clip based on information acquired from not less than one file belonging to the clip, and
for the clip determined to be the clip of the first type, not to perform information acquisition from all video files of files of a plurality of videos belonging to the clip and not to display information about a total time length.

7. The reproduction control apparatus according to any one of claims 1 to 6, **characterized in that**
the control means controls to display clips recorded in the recording medium as a list in which a thumbnail of a first file belonging to each clip can be selected by a user, and display information corresponding to a clip selected from the list.

8. The reproduction control apparatus according to claim 7, **characterized in that**
the control means controls to superimpose and display the information corresponding to the selected clip on a thumbnail of the clip selected by the user.

9. The reproduction control apparatus according to any one of claims 1 to 8, **characterized in that**
the control means
controls, based on a result of the determination of the determination means, whether to display the information based on the plurality of video files, and
controls to display information based on one video file of the plurality of video files forming the clip regardless of the result of the determination of the determination means.

10. The reproduction control apparatus according to any one of claims 1 to 9, **characterized in that**
when displaying a list of clips recorded in the recording medium using thumbnails of corresponding first files, the control means identifiably displays the clips of the first type and the clips of the second type.

11. The reproduction control apparatus according to any one of claims 1 to 10, **characterized in that**
the control means
controls, for the clip determined to be the clip of the second type, to reproduce a video of the clip based on not less than one file belonging to the clip, and
controls, for the clip determined to be the clip of the first type, not to reproduce a video of the clip based on the files of the plurality of videos belonging to the clip.

12. The reproduction control apparatus according to claim 7, **characterized in that**
the control means includes menu display means for displaying a menu associated with predetermined processing for the clip selected by the user during display of the list,
when the selected clip is the clip of the first type, the menu display means displays the predetermined processing in the menu in an unselectable state, and
when the selected clip is the clip of the second type, the menu display means displays the predetermined processing in the menu in a selectable state.

13. The reproduction control apparatus according to any one of claims 1 to 12, **characterized in that**
the clip of the first type is a chunk division clip, and the clip of the second type is a clip other than the chunk division clip.

14. The reproduction control apparatus according to claim 1, **characterized in that**
the clip of the first type is a clip recorded in the recording medium by a chunk transfer function of dividing a shot video by a predetermined unit into a plurality of video files and recording the video files in the recording medium, and transferring, to an external apparatus, a video file whose recording is completed before shooting of the clip is completed.

15. The reproduction control apparatus according to claim 1, **characterized in that**
the clip of the second type is a clip formed by a plurality of video files divided based on a predetermined condition, and
the maximum number of files of the plurality of video files forming the clip of the second type is smaller than the maximum number of files of the plurality of video files forming the clip of the first type.

16. The reproduction control apparatus according to claim 1, **characterized in that**
the clip of the second type is a clip formed by a plurality of video files divided based on a predetermined condition, and
in the clip of the second type, the number of files of the plurality of video files forming the clip is smaller than in a case where videos of the same time length are recorded as the clip of the first type.

17. A control method of a reproduction control apparatus for controlling reproduction of a clip formed by not less than one video file recorded in a recording medium, **characterized by** comprising:
a determination step of determining whether the clip is a clip of a first type formed by a plurality of video files divided by a predetermined unit or a clip of a second type different from the clip of the first type; and
a control step of controlling, for the clip determined to be the clip of the second type, to display information based on the not less than one video file forming the clip, and for the clip determined to be the clip of the first type, not to display information based on the plurality of video files forming the clip.

18. A program configured to, when loaded and executed by a computer, cause the computer to function as the reproduction control apparatus according to any one of claims 1 to 16.
